## Europäisches Patentamt

(19) **European Patent Office**

**Office européen des brevets**

(11) Veröffentlichungsnummer: **0 085 162**
**B1**

(12) **EUROPÄISCHE PATENTSCHRIFT**

(45) Veröffentlichungstag der Patentschrift:
10.04.85

(51) Int. Cl.⁴: **B 27 K 3/50**

(21) Anmeldenummer: **82111522.7**

(22) Anmeldetag: **11.12.82**

(54) **Holzschutzmittel.**

(30) Priorität: **29.12.81 DE 3151806**

(43) Veröffentlichungstag der Anmeldung:
**10.08.83 Patentblatt 83/32**

(45) Bekanntmachung des Hinweises auf die Patenterteilung:
**10.04.85 Patentblatt 85/15**

(84) Benannte Vertragsstaaten:
**AT BE CH DE FR GB IT LI NL SE**

(56) Entgegenhaltungen:
**EP - A - 0 035 096**
**DE - A - 2 455 082**
**DE - A - 3 004 319**

(73) Patentinhaber: **BASF Aktiengesellschaft,**
**Carl-Bosch-Strasse 38, D-6700 Ludwigshafen (DE)**

(72) Erfinder: **Reuther, Wolfgang, Dr., Am Pferchelhang 16,**
**D-6900 Heidelberg (DE)**
Erfinder: **Borck, Hans-Volker, Dipl.-Holzwirt, Im**
**Kastanienwald 8, D-7570 Baden-Baden (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Beschreibung

Die vorliegende Erfindung betrifft ein Holzschutzmittel, das eine Mischung von Wirkstoffen enthält, und Verfahren zum Behandeln von Holz mit dieser Mischung.

Es ist bekannt, zum Schutz von Holz gegen den Angriff holzzerstörender Pilze, wie *Coniophora cerebella, Poria monticola, Coriolus versicolor, Lenzites trabea*, N-Cyclohexyl-N-methoxy-2,5-dimethylfuran-3-carbonsäureamid zu verwenden (US-PS Nr. 3993772). Davon sind jedoch für einen wirksamen Holzschutz verhältnismässig hohe Anwendungskonzentrationen erforderlich. Hinzu kommt, dass diese Verbindung gegen holzverfärbende Pilze, wie *Pullularia pullulans, Sclerophoma pityophila*, nicht ausreichend wirksam ist.

Es ist ferner bekannt, dass sich mit Tris-(N-cyclohexyl-diazeniumdioxi)aluminium der Angriff holzzerstörender Pilze, wie *Coniophora cerebella, Merulius lacrimans, Poria monticola, Lentinus lepideus* u.a., bekämpfen lässt („Nachrichten aus Chemie, Technik und Laboratorium", Bd. 26, Heft 3/68, S. 117). Nachteilig ist jedoch, dass gegenüber einem sehr wichtigen holzzerstörenden Pilz, *Coriolus versicolor*, eine gravierende Wirkungsschwäche vorliegt, wodurch für einen sachgemässen Holzschutz hohe Aufwandkonzentrationen erforderlich sind. Im Falle von Tris-(N-cyclohexyl-diazeniumdioxi)aluminium ist dies besonders unerwünscht und problematisch, da aufgrund seiner Schwerlöslichkeit in Benzinfraktionen für eine Lösung nur aromatenreiche Lösungsmittelgemische in Frage kommen. Darüber hinaus führt diese Schwerlöslichkeit oft auch zu einer unerwünschten Kristallisation des Wirkstoffs auf der Holzoberfläche. Nachteilig ist ferner bei den auf dem Holzschutzsektor üblichen alkydharzhaltigen Anstrich- und Imprägniersystemen, dass eine erhebliche Trocknungsverzögerung der Anstrichfilme auftritt, da der Wirkstoff ein hochwirksames Antioxydans ist (DE-PS Nr. 1092005).

Es wurde nun gefunden, dass eine Mischung aus

A) N-Cyclohexyl-N-methoxy-2,5-dimethyl-furan-3-carbonsäureamid, und

B) Tris-(N-cyclohexyldiazeniumdioxi)-aluminium

eine über die Wirksamkeit der Einzelwirkstoffe hinausgehende fungizide Wirksamkeit aufweist, d.h. es liegt ein Synergismus vor. Das Mischungsverhältnis der Wirkstoffe kann in einem weiten Bereich schwanken. Beispielsweise wurde bei einem Gewichtsverhältnis A/B wie 1 : 3 bis 3 : 1, insbesondere 1 : 1, eine hervorragende Wirkung gegen pilzliche Holzschädlinge erzielt.

Das Gewichtsverhältnis 1 : 3 und 3 : 1 wurde gewählt, weil bei diesem Verhältnis ein guter Synergismus vorliegt und weil ausserhalb dieses Verhältnisses beispielsweise beim Verhältnis 1 : 5 und 5 : 1 nur noch ein schwacher oder gar kein Synergismus festgestellt werden kann. Innerhalb des Verhältnisses, beispielsweise beim Verhältnis 1 : 2 und 2 : 1, liegt wie beim Verhältnis 1 : 3 und 3 : 1 ein guter Synergismus vor.

Die neuen Wirkstoffmischungen können in Zubereitungen, wie Lösungen, Emulsionen, Pasten und Öldispersionen, angewendet werden. Die Zubereitungen enthalten im allgemeinen zwischen 0,1 und 90% Wirkstoffgemisch, vorzugsweise 0,25 bis 50% (Gewichtsprozente).

Von dem Wirkstoffgemisch werden je nach Holzart und Verwendungszweck des geschützten Holzes 0,05 bis 5, vorzugsweise 0,1 bis 2 kg Wirkstoffgemisch je Kubikmeter Holz in das Holz eingebracht. Die obere Grenze ergibt sich im allgemeinen aus wirtschaftlichen Gegebenheiten und kann im Einzelfall auch höher sein.

Die Anwendung des Wirkstoffgemisches erfolgt z.B. in öliger oder wässeriger Form durch Streichen, Spritzen, Sprühen und Tauchen. Die Anwendungsmengen, bezogen auf die Holzoberfläche, betragen bei diesen Verfahren je nach Anwendungsweck und Wirkstoffkonzentration im allgemeinen 75 bis 350, vorzugsweise 100 bis 200 g Wirkstoffmischung je Quadratmeter Holzoberfläche. Grundier- und Anstrichmittel für Holz enthalten beispielsweise 0,5 bis 3,5 Gew.-% der Wirkstoffmischung.

Ein besonders effektiver Holzschutz wird erzielt, wenn das Wirkstoffgemisch in Autoklaven, Kesseln, Kammern in speziellen technischen Verfahren, z.B. unter Anwendung des Vakuumverfahrens, Vakuumdruckverfahrens oder Doppelvakuumverfahrens, in das Holz eingebracht wird. Zum Schutz von Holzwerkstoffen kann das Wirkstoffgemisch bei der Herstellung der Holzwerkstoffe z.B. als Emulsion oder als solches dem Bindemittel oder Klebstoff, z.B. in Mengen von 1,5 bis 6 Gew.-%, bezogen auf den Klebstoff, zugesetzt werden.

Zur Vergrösserung des Wirkungsspektrums oder zur Erzielung besonderer Effekte können der Wirkstoffmischung auch andere Fungizide, Insektizide und andere Wirkstoffe zugesetzt werden. Besonders günstige Mischungspartner sind folgende Verbindungen:

Trialkylzinnverbindungen

Methylenbisthiocyanat

2-Halogenbenzoesäureanilid

N,N-Dimethyl-N'-phenyl-(N-fluormethyl-thio)sulfamid

N-Phenyl-N,N'-dimethyl-N'-fluordichlor-methylthiosulfonyldiamid

Benzimidazol-2-carbaminsäuremethylester

2-Thiocyanomethylthiobenzothiazol

Kupfernaphthenat

8-Hydroxychinolin bzw. dessen solubilisiertes Kupfersalz

N-trichlormethylthiotetrahydrophthalimid

N-Trichlormethylthiophthalimid

N-(1,1,2,2-Tetrachlorethylthio)tetra-hydrophthalimid

N,N-Dimethyl-N'-ptolyl-N'-dichlorfluor-methylthiosulfamid

1-(2-[2,4-Dichlorphenyl]-4-ethyl-1,3-dioxolan-2-ylmethyl)-1H-1,2,4-triazol

1-(2-[2,4-Dichlorphenyl]-4-propyl-1,3-dioxolan-2-ylmethyl)-1H-1,2,4-triazol

Tetrachlorisophthalsäuredinitril

*Beispiel 1*

*Grenzwertbestimmung der Wirkung gegen holzzerstörende Pilze*

Das Verfahren dient zur Bestimmung der vorbeugenden Wirkung von Holzschutzmitteln gegen holzzerstörende Pilze aus der Klasse der Basidiomyceten.

Gleichartige, bei 103 °C bis zur Gewichtskonstanz getrocknete Holzklötzchen (5 × 2,5 × 1,5 cm) wurden mit abgestuften Mengen des zu prüfenden Holzschutzmittels vollgetränkt, getrocknet, mit fliessendem Wasser ausgewaschen (Auswaschung der Wirkstoffmischung aus dem Holz) und in Glasschalen dem Angriff von Kulturen holzzerstörender Basidiomyceten ausgesetzt. Als Nährboden für die Pilze diente Malzagar (enthaltend 4% Malzextrakt). Die Wirkstoffe wurden in Isopropanol gelöst oder suspendiert. Die durch den Pilzbefall bewirkte Zerstörung des Holzes wurde durch den Gewichtsverlust der Probehölzer erfasst; ein Gewichtsverlust von 2% und mehr wurde als Holzzerstörung gewertet.

Angegeben werden eine untere Wirkstoffkonzentration, bei der das Holz gerade noch zerstört wird, und eine obere Wirkstoffkonzentration, bei der keine Holzzerstörung mehr zu erkennen ist, womit ein vollständiger Holzschutz erreicht ist. Für die Bewertung eines Holzschutzmittels in der Praxis ist immer von der oberen Wirkstoffkonzentration (minimale Hemmkonzentration MHK) nach Auswaschung auszugehen.

*Grenzwertbestimmung der Wirkung gegen holzzerstörende Pilze nach Auswaschung (in Kilo Wirkstoff je Kubikmeter Holz).*

Wirkstoff A = N-Cyclohexyl-N-methoxy-2,5-dimethylfuran-3-carbonsäureamid
Wirkstoff B = Tris-(N-cyclohexyldiazeniumdioxi)aluminium

| Wirkstoff | *Coniophora puteana* | *Coriolus versicolor* |
|---|---|---|
| A | 0,1-0,3 | 0,05-0,12 |
| B | 0,4-0,8 | etwa 7 |
| Wirkstoffmischung A/B = 1:1 | 0,05-0,1 | 0,1-0,2 |

Das Ergebnis des Versuches zeigt, dass eine 1 : 1 (Gewichtsverhältnis) Mischung der Wirkstoffe A und B gegenüber den Einzelwirkstoffen eine deutlich bessere Wirksamkeit besitzt, insbesondere aber die Schwäche von B gegenüber *Coriolus versicolor* durch Zumischung von A behoben wird.

*Beispiel 2*

A = N-Cyclohexyl-N-methoxy-2,5-dimethylfurancarbonsäureamid
B = Tris-(N-cyclohexyldiazeniumdioxi)-aluminium

Zur Demonstration des synergistischen Wirkung im beanspruchten Bereich wurden von A und B die minimalen Hemmkonzentrationen (MHK) in Agarnährböden ermittelt. Die MHK-Werte von A und B wurden verglichen mit den MHK-Werten von Gemischen A/B. Nach der von Kull *et al.* (F. C. Kull, P. C. Eismann, H. D. Sylvestrowicz, R. J. Mayer, „Applied Microbiol.", 9, 538 ff., 1961) beschriebenen Methode wurde der Synergismus ermittelt.

Dabei gilt: $\dfrac{Q_A}{Q_a} \cdot \dfrac{Q_B}{Q_b} = X$
wobei

$X = 1$ Additivität
$X > 1$ Antagonismus
$X < 1$ Synergismus
$Q_a =$ Konzentration von Substanz A, die die MHK darstellt
$Q_b =$ Konzentration von Substanz B, die die MHK darstellt
$Q_A =$ Menge von Substanz A im Gemisch A/B, wo Mikrobenwachstum unterbunden wird
$Q_B =$ Menge von Substanz B im Gemisch A/B, wo Mikrobenwachstum unterbunden wird

Die Wirkstoffmischungen wurden, in Aceton gelöst, einem warmen Malzagar zugesetzt. Der Agar wurde in Petrischalen gegossen und nach dem Erstarren mit dem Mycel von *Coriolus versicolor* beimpft und bei Normalklima (20°C, 90% Luftfeuchtigkeit) aufbewahrt.

*Tabelle*
*Testorganismus* Coriolus versicolor

| Gew.-Verh. A/B | MHK (ppm) | $Q_a$ | $Q_A$ | $Q_b$ | $Q_B$ | X |
|---|---|---|---|---|---|---|
| 10/0 | 20 | 20 | 20 | 200 | 0 | |
| 3/1 | 20 | 20 | 15 | 200 | 5 | 0,77 |
| 1/1 | 20 | 20 | 10 | 200 | 10 | 0,55 |
| 1/3 | 50 | 20 | 12,5 | 200 | 37,5 | 0,81 |
| 0/10 | 200 | 20 | 0 | 200 | 200 | |

*Beispiel 3*
*Rezepturbeispiel*

| | |
|---|---|
| N-Cyclohexyl-N-methoxy-2,5-dimethylfuran-3-carbonsäure | 1,0 Gew.-% |
| Tris-(N-cyclohexyl-diazeniumdioxi)-aluminium | 1,0 Gew.-% |
| γ-Hexachlorcyclohexan | 0,5 Gew.-% |
| Sikkativ (Metallsalze von Fettsäuren) | 0,25 Gew.-% |
| Alkydharz (100%, d.h. berechnet ohne Lösungsmittel) | 12 Gew.-% |
| aromatische und aliphatische Kohlenwasserstoffe (Siedebereich 180-220° C) | 85,25 Gew.-% |
| | 100,00 Gew.-% |

In entsprechender Weise wurden ölige Holzschutzmittel mit 0,25 bis 5 Gew.-% der Wirkstoffmischung A+B hergestellt, wobei das Gewichtsverhältnis A/B in den genannten Grenzen (3:1 bis 1:3) variiert wurde.

Dem Holzschutzmittel können auch Korrosionsinhibitoren zugesetzt werden.

Zur Erzielung von Farbeffekten können feinteilige anorganische oder organische Pigmente oder öllösliche Farbstoffe in die Holzschutzmittel eingearbeitet werden. Zur Herstellung wasserabweisender Imprägnieranstriche können den Holzschutzmitteln sogenannte *water repellents*, wie Metallstearate oder Wachse, zugesetzt werden.

## Patentansprüche

1. Holzschutzmittel, enthaltend eine Mischung aus

A) N - Cyclohexyl - N - methoxy - 2,5 - dimethyl - furan-3-carbonsäureamid, und

B) Tris - (N-cyclohexyldiazeniumdioxi) -aluminium.

2. Verfahren zum Schutz von Holz, dadurch gekennzeichnet, dass man Holz mit einer Mischung aus

A) N - Cyclohexyl - N - methoxy - 2,5 - dimethyl - furan-3-carbonsäureamid, und

B) Tris - (N-cyclohexyldiazeniumdioxi) -aluminium

behandelt.

## Revendications

1. Agent pour la protection du bois, contenant un mélange

A) de l'amide de l'acide N-cyclohexyl-N-méthoxy-2,5-diméthylfuranne-3-carboxylique, et

B) du tris-(N-cyclohexyldiazéniumdioxy) -aluminium.

2. Procédé pour protéger le bois, caractérisé en ce que l'on traite le bois avec un mélange

A) de l'amine de l'acide N-cyclohexyl-N-méthoxy-2,5-diméthylfuranne-3-carboxylique, et

B) du tris-(N-cyclohexyldiazéniumdioxy) -aluminium.

## Claims

1. A wood preservative containing a mixture of

(A) N - cyclohexyl - N - methoxy-2,5-dimethyl - furan-3-carboxamide, and

(B) tris - (N - cyclohexyldiazeniumdioxy) - aluminium.

2. A method of preserving wood, wherein the latter is treated with a mixture of

(A) N - cyclohexyl - N - methoxy-2,5-dimethyl - furan-3-carboxamide, and

(B) tris - (N - cyclohexyldiazeniumdioxy) - aluminium.